# EUROPEAN PATENT SPECIFICATION

(11) **EP 1 255 395 B1**
(45) Date of publication and mention of the grant of the patent: **30.03.2005**
(21) Application number: 02252950.7
(22) Date of filing: 25.04.2002
(51) Int. Cl.: H04L 29/06

(54) **External access to protected device on private network**
Externer Zugriff auf eine gesicherte Vorrichtung in einem privaten Netzwerk
Accés externe à un dispositif securisé dans un réseau privé

(30) Priority: 30.04.2001 US 845104
(43) Date of publication of application: 06.11.2002
(73) Proprietor: Xerox Corporation, Rochester, New York 14644 (US)
(72) Inventor: Tredoux, Gavan, Rochester, New YOrk 14612-4911 (US); Xu, Xin, Palo Alto, California 94306 (US); Lyon, Bruce C, Victor, New York 14564 (US); Cain, Randy L, Plano, Texas 75025 (US)
(74) Representative: Skone James, Robert Edmund

(56) References cited:
- WO-A-00/68823
- WO-A-01/44951
- WO-A-01/65768
- WO-A-02/33532

## Description

The present invention relates to protection and access protocols for networks such as computer networks and the like. In particular, the present invention relates to schemes allowing access to and from devices on protected networks from outside the protected networks.

Networks connected to the Internet rely on firewalls and proxy servers to protect the networks against intrusion by unauthorized persons. Firewalls typically allow only incoming connections to designated machines and/or via particular protocols (TCP/IP, HTTP, FTP, etc.), disallowing all other traffic. Firewalls can also restrict traffic from the network to the Internet, as can outgoing proxy servers, by restricting destinations and/or protocols. However, these security restrictions often frustrate some uses of the Internet for legitimate purposes. For example, remote network equipment diagnosis and service is severely impaired, if not completely disabled, by firewalls.

Some firewalls can be modified and/or reconfigured to permit the traffic entry, but this can require the purchase of additional hardware and/or software. The cost associated with hardware and/or software purchase, combined with the difficulty of effecting a change in corporate policies regarding network security, would likely be a significant obstacle to the realization of such modifications. In addition, many firewalls and/or routers employ address masquerading and network address translation (NAT). Masquerading and NAT allow the use of internal network address spaces, but typically prevent incoming traffic from reaching the internal addresses since the internal addresses are non-routable and non-unique. No commercially-used or -available technique appears to solve all of these problems without modification of firewall/proxy server configurations, firewall/proxy server capabilities, and/or network security policies. For example, many virtual private network (VPN) schemes provide secure access between private networks via the Internet, but all require extensive modifications to the firewalls, proxy servers, and/or security policies of the connected networks.

WO-A-01/65768 published on 7 September 2001 and thus constituting part of the state of the art under Article 54(3) EPC discloses an access system in which a proxy server and polling server are positioned on opposite sides of a firewall. The polling server periodically polls the proxy server through the firewall to determine whether application data is waiting in a queue of the proxy server.

In accordance with one aspect of the present invention, a reverse proxy network communication scheme comprises:
a proxy agent located inside a protected network addressable by a least one internal network device, the proxy agent establishing outgoing network connections;
a security device through which all traffic between the protected network and external networks must travel, the security device permitting at least outgoing connections via at least one predetermined network protocol;
an external proxy server outside the protected network and reachable by the proxy agent via outgoing network connections through the security device, the external proxy server also being addressable by at least one external network device, thereby allowing communication between the at least one external network device and the at least one internal network device, wherein the proxy agent and external proxy server are adapted to communicate by causing the proxy agent to connect to the external proxy server to check for pending traffic, the external proxy server returning a slow stream of spurious bytes ignored by the proxy agent if there is nothing pending, and the external proxy server immediately transmitting data to the proxy agent when the external proxy server receives data from a client, thus closing the connection to flush any buffering performed by intervening (outgoing) proxy servers.

In accordance with a second aspect of the present invention, a method of accessing an internal network device on a protected network, the network including a security device comprises:
storing data addressed to the internal network device in an external proxy server;
maintaining a proxy agent on the protected network, the proxy agent executing the steps of:
   polling the external proxy server for data addressed to the internal network device;
   forwarding to the internal network device any data on the external proxy server and addressed to the internal network device; and
   forwarding to the external proxy server any data addressed to an external device in communication with the external proxy server, wherein polling comprises:
      connecting to the external proxy server to check for pending traffic;
      returning a slow stream of spurious bytes ignored by the proxy agent if there is nothing pending;
      immediately transmitting data from the external proxy server to the proxy agent when the external proxy server receives data from a client, thus closing the connection to flush any buffering performed by intervening (outgoing) proxy servers.

Various embodiments of the invention allow traffic from outside a protected network to connect to an internal network device of the protected network through a firewall configured to protect the network. For example, TCP/IP traffic traveling to the protected network via the Internet can reach an intended computer on the internal network. The technique employed requires little or no alteration of the intended internal network device, firewall, proxy server, or security policy configurations, so long as outgoing connections are permitted via at least one protocol, such as, for example, HTTP. The outgoing connections can be made via a proxy server if necessary. Yet, even though the outgoing connection can be limited to one protocol, incoming traffic is not limited to the one protocol and can employ any protocol the Internet and the protected network, and the intended device, are capable of transmitting and/or handling. Public addressability of the protected network is not required, yielding access to the private, non-unique address space that is not ordinarily routable from clients outside the protected network. Still, the technique preserves network security via several built-in security measures.

The technique applied by various embodiments of the invention is referred to as "Reverse Proxying," in part because it includes two primary components: a proxy agent, located within the protected network; and an external proxy server, located outside the protected network (for example, on the Internet) at a location reachable by the proxy agent. The external proxy server stores traffic addressed to devices within the protected network until a proxy agent discovers queued traffic intended for the protected network, at which point the external proxy server forwards this traffic to the intended internal network device(s). In turn, the proxy agent forwards any responses it receives from the internal network device(s) back to the external proxy server, which transmits the responses to the intended clients.

The external proxy server represents clients connecting to the internal (protected) network devices; for example, clients can establish TCP/IP connections to the proxy server and send and receive data to the external proxy server on designated TCP/IP ports that are, in effect, forwarded by the external proxy server to the proxy agent. Likewise, the proxy agent connects to the otherwise inaccessible internal network devices, and sends/transmits and receives data as if it were the client. To a real external client, the external proxy server is the internal network device - the external proxy server thus masquerades as, or "pretends to be," the internal network device. To an internal network device, the proxy agent is the external client - the proxy agent thus masquerades as, or "pretends to be," the client. The link between the external proxy server and the proxy agent is transparent to both the external client and to the internal network device, and is of no concern to them.

To effect the transparent connection, the invention employs "trickle down polling" to reduce latency and provide highly responsive service without imposing the high network loads that can result from too-frequent polling. In addition, several security measures can be built-in to ensure that it cannot be used to compromise the integrity and privacy of the networks it services, up to the highest standards met by current Internet applications. For example, communication between the proxy agent and the external proxy server can be encrypted using an encryption system, such as the industry standard Secure Sockets Layer (SSL) for HTTP, preventing eavesdropping. Authentication of both the agent and the Server can be enforced by requiring, for example, X.509 certificates of both, or using another authentication technique, such as other "public key" based cryptography systems, and can be verified by a trusted certification authority. The external proxy server also implements a cookie rewriting process, ensuring that all cookies have truly unique identifiers; if a browser should attempt to transmit a cookie to a destination for which it is not intended, the external proxy server will silently drop the cookie from the request. Further, network administrators can be given fine-grained control over the Reverse Proxying system.

Some examples of schemes and methods according to the invention will now be described with reference to the accompanying drawings, in which:-
FIG. 1 illustrates a typical protected network connected to the Internet;
FIG. 2A shows a simplified schematic of the connections between a client machine on a protected network and a sever on the Internet;
FIG. 2B shows a simplified schematic of the connections between a client machine on the Internet and a server on a protected network according to principles of the invention described in this application;
FIG. 3 shows a more detailed schematic of the connections between client machines and servers on protected networks according to principles of the invention described in this application;
FIG. 4 depicts two exemplary private networks, to which a web browser is connected, through a reverse proxy server. The two distinct networks have identical private network addresses, and the figure shows how cookies originating from these networks may be confused by the browser;
FIG. 5 shows an exemplary timeline of an HTTP cookie protocol that can be used in embodiments of the invention where a browser connects to a unique network address space; and,
FIG. 6 shows an exemplary timeline of an HTTP cookie protocol that can be used in embodiments of the invention where cookies from duplicate private network address spaces are confused.

In various embodiments of the invention, communication between a device internal to a protected network and a device external to a protected network can be achieved where conventional security devices, such as firewalls and/or proxy servers, would not allow such communication. For example, incoming TCP/IP connections from a network 10, such as the Internet, outside a firewall-protected network 50, to protected/internal devices on the protected network can occur. The technique used in various embodiments requires no alteration of the firewall 20 configuration or existing security policies, provided that the firewall 20 permits outgoing HTTP connections from the protected/internal device. Incoming connections are not restricted to any particular protocol, such as HTTP, but may be any appropriate networking protocol, including, but not limited to, FTP, gopher, smtp, pop, http, rtsp, and IPX. The outgoing connections are not limited to HTTP, but can be any appropriate protocol the networks, firewall, and/or proxy servers can handle. No alteration of the devices typically connected to a protected network is required, nor does a system deployed according to the principles of the invention require that the protected network 50 be publicly addressable. In this example, the protected network 50 includes a number of desktop devices 52 and an Intranet Web Server 51 connected to a router 53. The technique employed will function unaltered in a private, non-unique address space not ordinarily routable for clients on the Internet 10. Several built-in security measures maintain the privacy of the firewalled network.

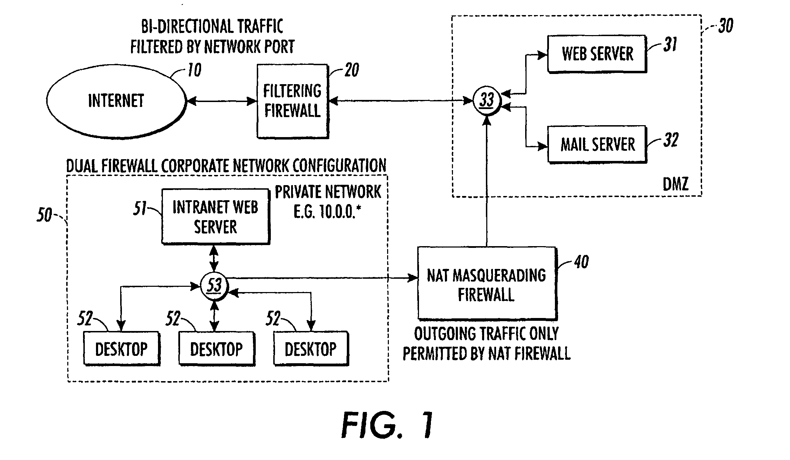

FIG. 1 illustrates a highly secure network configuration with dual firewalls 20, a public "Demilitarized Zone" (DMZ) segment 30 having a web server 31 and mail server 32 coupled by a router 33, and a private address space 50 completely inaccessible to outside hosts and connected to the DMZ segment 30 via a NAT masquerading firewall 40. Devices and servers for internal use would be hosted on the private segment and would therefore ordinarily be totally isolated from the Internet 10.

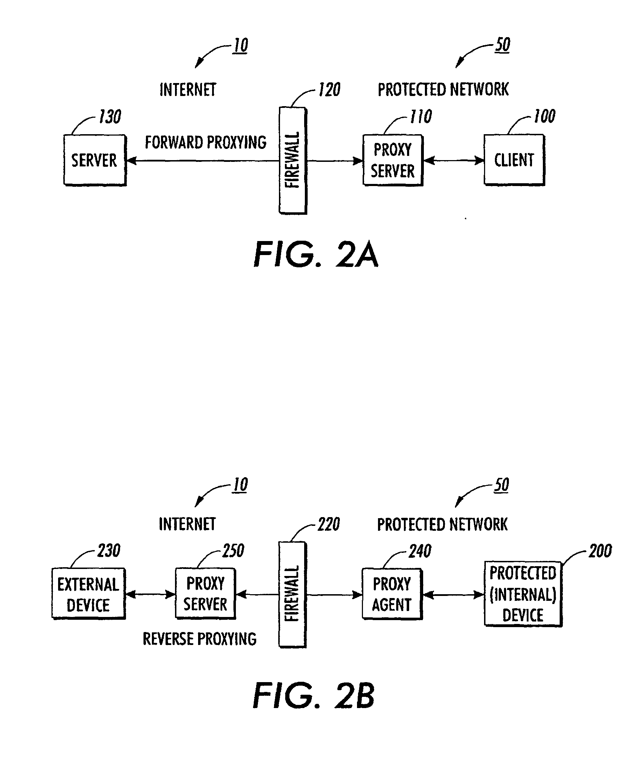

Applying the techniques of various embodiments of the invention, network traffic between external network devices and internal network devices hidden behind the security device 20 is possible even though the protected network uses a private address space. For example, embodiments similar to that shown in FIG. 2B can have TCP/IP network connectivity between an external device and devices hidden behind firewalls 20. The only assumption made is that outgoing connections, such as HTTP connections, are permitted by the existing firewall configurations, possibly through an outgoing proxy server, and by corporate security policies. No alterations are required to:
1. The networked devices.
2. The firewalls used to protect the network.
3. Corporate security policies.
4. The address spaces
5. The clients used to connect to the hidden devices
6. The TCP/IP protocol used by the client and server

The absence of such alterations can render the processes of the present invention easy and inexpensive to deploy, with substantially no disruption of the existing network, which can be a considerable improvement over existing solutions.

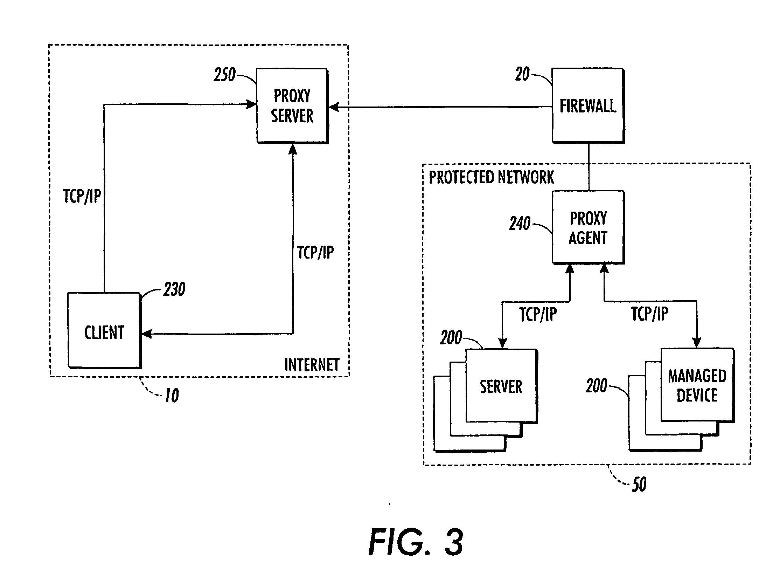

As illustrated in, for example, FIGS. 2B, and 3-6, "Reverse Proxying" primarily comprises two components: the proxy agent 240 and the external proxy server 250. The proxy agent 240 is located within the protected network 50 and is connected to a protected device 200. It is assumed that this agent has the ability to establish outgoing network connections, such as HTTP connections, possibly through an outgoing HTTP proxy server, to the Internet 10. For the purposes of explaining the operation of embodiments of the invention, particular protocols will be used, but the invention is not limited to the particular protocols used in this example. In the Figure 2B example, the external proxy server 250 is located outside the protected network 50, on the Internet 10, at a location reachable by the agent and receives traffic from external devices 230 addressed to internal network devices 200. A firewall is provided between the proxy server 250 and proxy agent 240. The proxy agent 240 periodically polls the external proxy server 250 to check for queued traffic intended for the protected network 50. When the proxy agent 240 discovers traffic intended for internal network devices 200, it forwards this traffic to the intended recipients. In turn, the proxy agent 240 will forward any responses it receives back to the external proxy server 250, which will transmit the responses to the intended external network device clients 230. FIG. 3 illustrates an embodiment of this architecture:

For clients connecting to the hidden (protected) internal network devices, the external proxy server 250 represents those devices and thus masquerades as the internal network devices. In various embodiments of the invention, clients establish TCP/IP connections to the proxy server 250, and send and receive data to the external proxy server 250, on designated TCP/IP ports that are, in effect, forwarded by the external proxy server 250 to the proxy agent 240. Likewise, the proxy agent 240 connects to the otherwise hidden internal network devices, and sends and receives data as if it is the external network device client. Thus, the proxy agent 240 masquerades as the external network device client. The link between the external proxy server 250 and the proxy agent is transparent to both the external network device client and the internal network device, and is of no concern to them.

As mentioned above, in various embodiments of the invention, connections and data received by the external proxy server 250 are stored for later retrieval by the proxy agent 240. The proxy agent polls the external proxy server 250 at regular intervals, using, for example, an HTTP connection, to discover pending connections and data, and deliver responses from the intended internal network devices. In effect, the TCP/IP traffic between the external network device client and the internal network device is "tunneled" through HTTP in this way, encapsulated in HTTP requests and responses with header information indicating the source and destination IP addresses and the intended ports. To improve efficiency, multiple requests can be multiplexed through the same HTTP connection.

It is instructive to compare the Reverse Proxying, with traditional "forward" proxying. FIGS. 2A and 2B illustrate the difference between traditional proxying (FIG. 2A) and the reverse proxying employed by embodiments of the invention (FIG. 2B).

Providing access to *private* IP addresses is what allows the success and generality of this scheme. The private IP address spaces 50 are not unique across the Internet 10 and many different organizations reuse the same IP address spaces 50. For the IP address spaces 50 and the internal network devices 200 residing therein to be addressable by external network device clients 230, the external proxy server 250 maintains a map between local TCP/IP ports on the proxy server 250 and remote private IP addresses distinguished by the identify of the proxy agent used to access them. Proxy agents publish a list of addresses they can reach to the external proxy server 250, and this list is used by the external proxy server 250 to establish the map between local ports and agents/remote addresses.

No assumptions need be rendered regarding the network protocol used by the external network device client to communicate with the internal network device and/or (hidden) server on the protected network. All network traffic, for example TCP/IP traffic, is tunneled by the proxy agent 240 through the exemplary HTTP connection between the proxy agent 240 and the external proxy server 250, and there is generally no need for them to alter this data, with some notable exceptions. Certain protocols can require special treatment, particularly HTTP itself. The use of embedded hyperlinks in HTML pages implies that a client may be redirected by a link to an inaccessible URL hidden behind the security device/firewall 20, away from the external proxy server 250 which enables its access to the hidden network. To prevent or minimize such undesirable redirection, a web browser/external client device 230 can be configured (through standard browser settings) to use the external proxy server 250 as a true HTTP proxy server, using the local port on the server described above. This ensures that *all* HTTP requests are forwarded intact and uninterpreted to the external proxy server 250, which passes those requests to the proxy agent 240. The agent 240 retrieves the requested URLs, which are directly accessible to it since it is behind the firewall 20.

The proxy agent 240 is forced to poll the external proxy server 250 for pending traffic because it is assumed that only outgoing HTTP connections are permitted by the network security device 20. This introduces a *latency* problem, since the polling interval determines the responsiveness of the TCP/IP traffic tunneled over the polled HTTP connection. Latency refers to delays introduced by the time it takes for traffic to travel from an origin to a destination and from the destination back to the origin. Since traffic must be queued by the proxy server until the proxy agent polls it, there is a delay between arrival of the traffic at the proxy server and arrival at the proxy agent, increasing the latency. High latency, delays on the order of tenths of a second or more, between requests and responses can compromise the practical usability of a system employing reverse proxying. Latency can be reduced by a decreased polling interval, but this imposes an increasing network load burden and can be limited by the minimum time required to establish and complete an outgoing HTTP request.

To reach a suitable compromise between latency reduction and network load, the invention employs "trickle down" polling to reduce latency and provide highly responsive service without imposing the high network loads implied by too-frequent polling. The proxy agent 240 connects to the external proxy server 250 to discover pending traffic. If there is nothing pending, the external proxy server 250 returns a slow stream of spurious bytes which are ignored by the proxy agent 240. When the external proxy server 250 receives data from an external network device or client/browser 230, it is immediately transmitted to the proxy agent 240 and the connection is closed to flush any buffering performed by intervening (outgoing) proxy servers. To improve response times, the agent 240 can open several connections to the proxy server 250 to reduce the likelihood that no connections will be open when traffic arrives. The trickling-down of spurious bytes prevents any timeouts on the outgoing HTTP request, which may be enforced by intervening outgoing proxy servers. In this way, highly responsive service is guaranteed since the proxy agent 240 can usually be informed immediately of incoming traffic, removing the undesirable latency between the time that this traffic is queued on the external proxy server 250 and the time that the proxy agent 240 retrieves it. However, the Internet 10 itself can impose a lower bound on latency since it can determine the time taken to transmit requests and responses, and network protocols used by the Internet, such as TCP/IP, do not provide guaranteed service.

Several security measures can be built into the invention to ensure that it cannot be used to compromise the integrity and privacy of the networks it services, up to the highest standards met by current Internet applications.

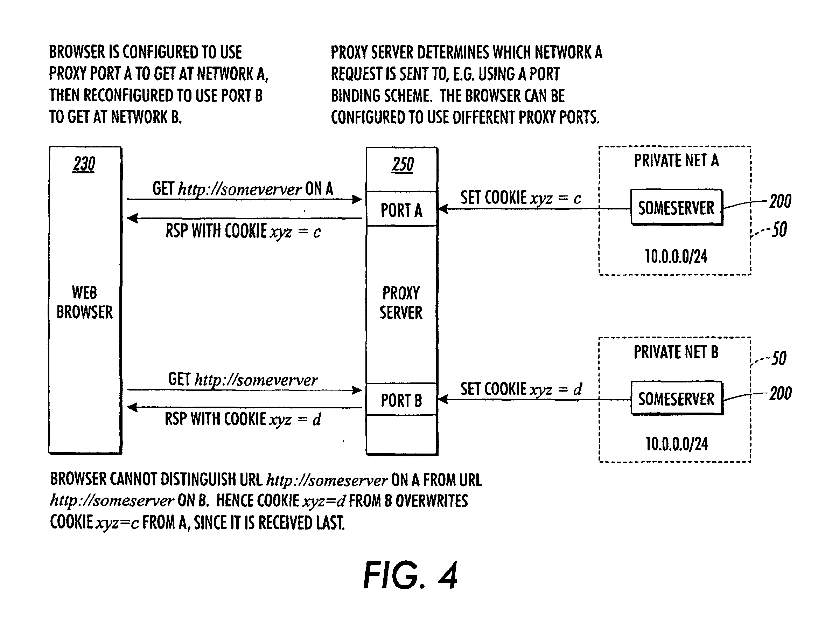

Communication between the proxy agent 240 and the external proxy server 250 can, for example, be encrypted using an encryption system, such as the industry standard Secure Sockets Layer (SSL) for HTTP, preventing eavesdropping. Authentication of both the agent 240 and the server 250 can be enforced by requiring, for example, X.509 certificates of both, or using another authentication technique, such as other "public key" based cryptography systems, and can be verified by a trusted certification authority. The external proxy server 250 can also implement a cookie rewriting process, such as the exemplary process illustrated in FIGS. 4-6, ensuring that all cookies have truly unique identifiers.

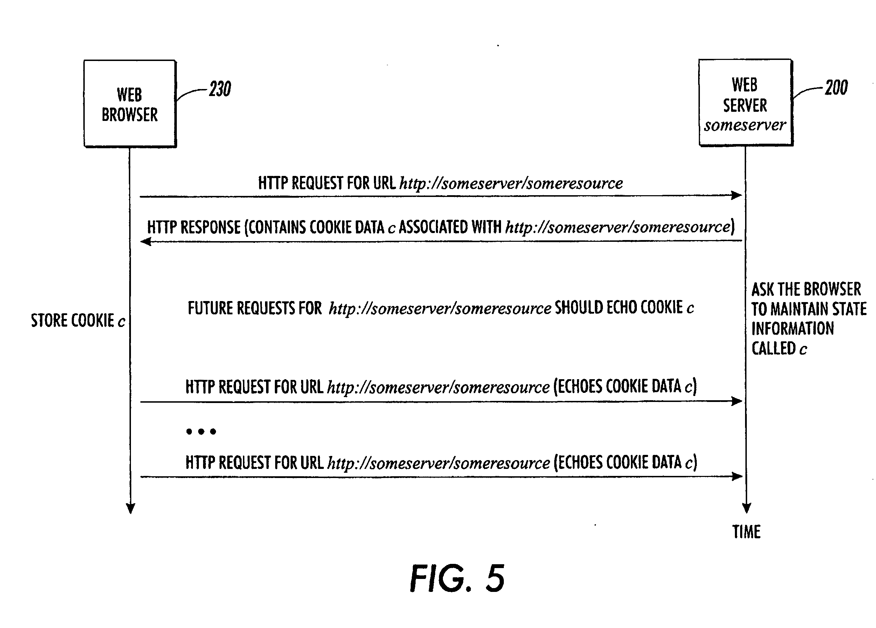

As shown in Figure 5, web servers 200 can request that clients 230 (web browsers) maintain state through a mechanism known as "cookies". To effect cookies, servers insert additional headers onto replies to HTTP requests, which specify named "echo" data that the browser should repeat back to the server when accessing certain resources identified in the header. Each data element to be stored and echoed is called a "cookie".

Following such a cookie protocol, a web browser associates cookies with the Uniform Resource Locators (URLs) to which they were bound by the web server. In normal Internet usage, these URLs are guaranteed to be unique. However, in a reverse proxying situation, in which private network addressing becomes a factor, these URLs are not necessarily unique - this is true whether or not IP addresses or symbolic names are used in the URL, since symbolic domain names need not be unique across private IP spaces. This can create two problems:
1. Race conditions. In this situation, the browser overwrites an existing cookie for a URL with the most recent value tied to that URL. There is consequently a race between servers to set the cookie data. A server that associates cookie data with a URL is thus not guaranteed that it will receive the same data back. This can partially or totally disable web servers/applications that rely on correct state data echoed in cookies.
2. Privacy violations. In this situation, cookie data associated with a URL can contain private data from a protected network, since servers in such networks can assume that all transmission between themselves and clients is secured. However, the browser could now unwittingly transmit this private data to a wholly different network, since it confuses the non-unique URLs. Servers in the wrong network might therefore gather sensitive data from other private networks, intentionally or unintentionally, in this way. This can be a serious compromise of the network security established by the firewall/private IP space system.

Figure 4 illustrates how cookies from different networks can be confused by web browsers. Web clients (browsers) 230 use URLs to uniquely identify resources on the Internet 10. This is both specified by the relevant standards and by common practice. However, by providing access to private/protected networks 50 with not-necessarily-unique URLs,. reverse proxying schemes create potential confusion between these URLs. This only becomes an issue, however, when a stored state is associated with a (non-unique) URL(s) and transmitted *later* as part of requests for *other* networks, since all current requests are explicitly directed to the proper destinations by the proxy server configuration. This situation is analogous to luggage-handling errors on airline flights, where the incorrect luggage is transported on a flight that is directed to an otherwise-correct destination, due to a non-unique label on the luggage.

In various embodiments of the invention, a process referred to as "cookie rewriting" eliminates cookie ambiguity. All cookies have names. Typically, proxy servers do not *alter* any data sent or received by proxy. In various embodiments, the invention makes an exception for cookie names, which are rewritten by the proxy server as they are transmitted back to browsers for storage, to indicate clearly which private network they originate from. The reverse proxying scheme has some way of distinguishing private networks in embodiments of the invention (e.g. by the identity of the agent within those networks which effects firewall traversal) or the proxy server would not function correctly. One way of doing this is to prepend the unique identity of the private network to each cookie name (that is, place the private network identifier at the "front" of the cookie as a "prefix"), which is the implementation used in various embodiments of the invention, though other rewriting methods are possible. The prefix can then be stripped from the cookie when it is transmitted. Cookies passed by the browser with a request which originated from a different network are silently dropped by the proxy server. Thus the external proxy server maintains the privacy of the networks and ensures correct cookie storage and passing by browsers.

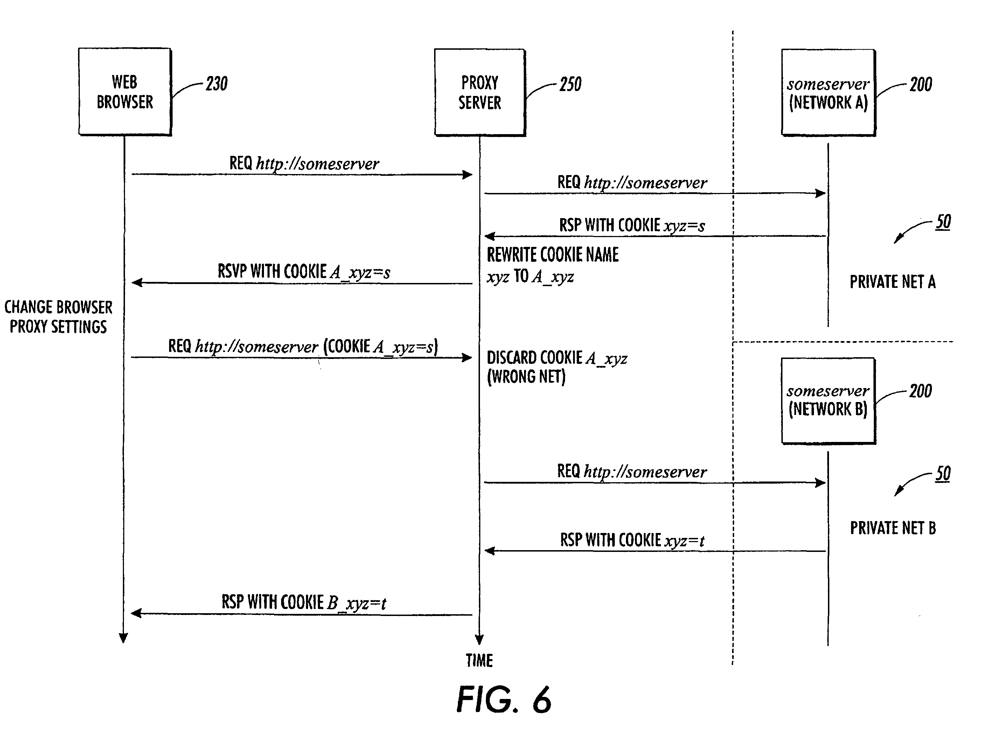

In the situation shown in Figure 6, a browser first issues an HTTP GET request for the URL http://someserver, via the Proxy Server. The browser is configured to use Port A on the Proxy Server, which associates Port A with the private network A. The Proxy Server performs the request on the behalf of the browser (using whatever firewall traversal scheme it supports), and inspects any cookies which the *someserver* returns in the response. In this case, the cookie *xyz* with the value *s* has been set by *someserver.* The Proxy server rewrites the name of the cookie to *A_xyz* so it is clearly marked as a cookie intended for private network A. Note that the web browser attaches no intrinsic meaning to cookie names, simply echoing them to the URLs they are associated with. The browser receives the HTTP response from the proxy server, and stores the cookie *A_xyz = s.*

Later the browser is reconfigured to use Port B on the Proxy Server, which associates port B with the private network B. The browser issues an HTTP GET request for the same URL http://someserver, sending the cookie A_xyz=s with the request. It does so because it has no way of determining that the intended network has changed. The Proxy Server inspects any cookies contained in the request before forwarding it to *someserver* in the network B. Since the cookie *A_xyz=s* is intended for A and not B, it is discarded by the Proxy Server, and the rest of the request is forwarded. As before, the Proxy Server rewrites the names of any cookies contained in the HTTP response, so that *xyz=t* becomes *B_xyz=t.* This ensures that, in future, the cookie will not be passed to the network A, or any other network it was not intended for.

In addition to the above security measures, network administrators can be given fine-grained control over the Reverse Proxying system. For example, administrators can be granted the authority and/or ability to allow or deny entry into their network on a per-session basis by granting a permission, such as a short-lived key; administrators can also be granted the authority and/or ability to completely disable access, or limit it by other criteria.

## Claims

1. A reverse proxy network communication system comprising:
a proxy agent (240) located inside a protected network (50) addressable by a least one internal network device (200), the proxy agent establishing outgoing network connections;
a security device (220) through which all traffic between the protected network (50) and external networks (10) must travel, the security device permitting at least outgoing connections via at least one predetermined network protocol;
an external proxy server (250) outside the protected network (50) and reachable by the proxy agent (240) via outgoing network connections through the security device (220), the external proxy server (250) also being addressable by at least one external network device (230), thereby allowing communication between the at least one external network device and the at least one internal network device, wherein the proxy agent (240) and external proxy server (250) are adapted to communicate by causing the proxy agent (240) to connect to the external proxy server (250) to check for pending traffic, **characterised by** the external proxy server (250) returning a slow stream of spurious bytes ignored by the proxy agent (240) if there is nothing pending, and the external proxy server immediately transmitting data to the proxy agent (240) when the external proxy server receives data from a client, thus closing the connection to flush any buffering performed by intervening (outgoing) proxy servers.

2. The system of claim 1, further including an outgoing proxy server (200) in communication with the proxy agent (240) and which the proxy agent uses to establish outgoing connections.

3. The system of claim 2, wherein the external proxy server (250) is in communication with at least one other network, receives, and stores data addressed to the at least one internal network device, the proxy agent forwarding outgoing data to the external proxy server, which transmits the data to the at least one external network device.

4. The system of claim 3, wherein the proxy agent (240) polls the external proxy server to check for data addressed to the at least one internal network device, and wherein the proxy agent (240) downloads data addressed to the at least one internal network device from the external proxy server and forwards the data to the at least one internal network device.

5. A method of accessing an internal network device (200) on a protected network (50), the network including a security device (220), the method comprising the steps:
storing data addressed to the internal network device (200) in an external proxy server (250);
maintaining a proxy agent (240) on the protected network, the proxy agent executing the steps of:
polling the external proxy server (250) for data addressed to the internal network device;
forwarding to the internal network device (50) any data on the external proxy server and addressed to the internal network device (200); and
forwarding to the external proxy server (250) any data addressed to an external device in communication with the external proxy server, wherein polling comprises:
connecting to the external proxy server (250) to check for pending traffic;
the method is **characterised by** the steps:
returning a slow stream of spurious bytes ignored by the proxy agent (240) if there is nothing pending;
immediately transmitting data from the external proxy server (250) to the proxy agent (240) when the external proxy server receives data from a client, thus closing the connection to flush any buffering performed by intervening (outgoing) proxy servers.

6. A method according to claim 5, further comprising communicating from the internal network device (50) to the external proxy server (250) using a first network protocol, the external network device (230) communicating with the external proxy server (250) using a second network protocol, wherein data addressed to the internal network device (50) using the second network protocol is transmitted to the internal device (50) using the first network protocol so that the second network protocol is carried to the internal network device inside the first network protocol.

7. The method of claim 5 or claim 6, further comprising rewriting cookies with unique identifiers to prevent inadvertent transmission of private information to an incorrect recipient on the protected network (50)

8. A method according to any of claims 5 to 7, wherein the proxy agent (240) opens a plurality of connections to the proxy server (250).

## Patentansprüche

1. Rückwärts-Proxy-Netzwerk-Kommunikationssystem, das umfasst:
einen Proxyagenten (240), der innerhalb eines geschützten Netzwerks (50) gelegen ist und durch wenigstens eine interne Netzwerkvorrichtung (200) adressierbar ist, wobei der Proxyagent ausgehende Netzwerkverbindungen herstellt;
eine Sicherheitsvorrichtung (220), durch die jeder Verkehr zwischen dem geschützten Netzwerk (50) und externen Netzwerken (10) laufen muss, wobei die Sicherheitsvorrichtung wenigstens ausgehende Verbindungen über wenigstens ein vorbestimmtes Netzwerkprotokoll gestattet;
einen externen Proxyserver (250) außerhalb des geschützten Netzwerks (50) und erreichbar durch den Proxyagenten (240) über ausgehende Netzwerkverbindungen durch die Sicherheitsvorrichtung (220), wobei der externe Proxyserver (250) auch durch wenigstens eine externe Netzwerkvorrichtung (230) adressierbar ist, um dadurch Kommunikation zwischen der wenigstens einen externen Netzwerkvorrichtung und der wenigstens einen internen Netzwerkvorrichtung zu gestatten, wobei der Proxyagent (240) und der externe Proxyserver (250) eingerichtet sind, zu kommunizieren, indem der Proxyagent (40) veranlasst wird, sich mit dem externen Proxyserver (250) zu verbinden, um nach anhängigem Verkehr zu sehen, **dadurch gekennzeichnet, dass** der externe Proxyserver (250) einen langsamen Strom von unechten Bytes zurückgibt, der von dem Proxyagenten (240) ignoriert wird, wenn nichts anhängig ist, und der externe Proxyserver sofort Daten an den Proxyagenten (240) sendet, wenn der externe Proxyserver Daten von einem Client empfängt, um so die Verbindung zu schließen, um jegliche durch eingreifende (ausgehende) Proxyserver durchgeführte Pufferung auszuspülen.

2. System nach Anspruch 1, das weiter einen ausgehenden Proxyserver (200) in Kommunikation mit dem Proxyagenten (240) enthält und den der Proxyagent verwendet, um ausgehende Verbindungen herzustellen.

3. System nach Anspruch 2, wobei der externe Proxyserver (250) mit wenigstens einem anderen Netzwerk in Kommunikation steht und an die wenigstens eine interne Netzwerkvorrichrung adressierte Daten empfängt und speichert, wobei der Proxyagent ausgehende Daten zu dem externen Proxyserver befördert, der die Daten an die wenigstens eine externe Netzwerkvorrichtung sendet.

4. System nach Anspruch 3, wobei der Proxyagent (240) den extemen Proxyserver abfragt, um nach Daten zu sehen, die an die wenigstens eine interne Netzwerkvorrichtung adressiert sind, und wobei der Proxyagent (240) an die wenigstens eine interne Netzwerkvorrichtung adressierte Daten von dem externen Proxyserver herunterlädt und diese Daten zu der wenigstens einen internen Netzwerkvorrichtung befördert.

5. Verfahren zum Zugreifen auf eine interne Netzwerkvorrichtung (200) auf einem geschützten Netzwerk (50), wobei das Netzwerk eine Sicherheitsvorrichtung (220) enthält, wobei das Verfahren die folgenden Schritte umfasst:
Speichern von Daten, die an die interne Netzwerkvorrichtung (200) adressiert sind, in einem externen Proxyserver (250);
Unterhalten eines Proxyagenten (240) auf dem geschützten Netzwerk, wobei der Proxyagent die folgenden Schritte ausführt:
Abfragen des externen Proxyservers nach Daten, die an die interne Netzwerkvorrichtung adressiert sind;
Befördern aller Daten, die sich auf dem externen Proxyserver befinden und an die interne Netzwerkvorrichtung (200) adressiert sind, zu der internen Netzwerkvorrichtung (50), und
Befördern aller Daten, die an eine externe Vorrichtung in Kommunikation mit dem externen Proxyserver adressiert sind, zu dem externen Proxyserver (250), wobei das Abfragen umfasst:
Verbinden mit dem externen Proxyserver (250), um anhängigen Verkehr zu prüfen,
wobei das Verfahren **gekennzeichnet ist durch** die folgenden Schritte:
Zurückgeben eines langsamen Stromes von unechten Bytes, der von dem Proxyagenten (240) ignoriert wird, wenn nichts anhängig ist;
sofortiges Senden von Daten von dem externen Proxyserver (250) an den Proxyagenten (240), wenn der externe Proxyserver Daten von einem Client empfängt, um so die Verbindung zu schließen, um jegliche **durch** eingreifende (ausgehende) Proxyserver durchgeführte Pufferung auszuspülen.

6. Verfahren nach Anspruch 5, das des Weiteren Kommunikation zwischen der intemen Netzwerkvorrichtung (50) und dem externen Proxyserver (250) unter Verwendung eines ersten Netzwerkprotokolls umfasst, wobei die externe Netzwerkvorrichtung (230) mit dem externen Proxyserver (250) unter Verwendung eines zweiten Netzwerkprotokolls kommuniziert, wobei an die interne Netzwerkvorrichtung (50) unter Verwendung des zweiten Netzwerkprotokolls adressierte Daten unter Verwendung des ersten Netzwerkprokolls zu der internen Vorrichtung (50) übertragen werden, sodass das zweite Netzwerkprotokoll im Innem des ersten Netzwerkprotokolls zu der internen Netzwerkvorrichtung befördert wird.

7. Verfahren nach Anspruch 5 oder Anspruch 6, das des Weiteren das Umschreiben von Cookies mit einmaligen Identifizierem umfasst, um unbeabsichtigtes Übertragen von privater Information zu einem falschen Empfänger auf dem geschützten Netzwerk (50) zu verhindern.

8. Verfahren nach einem der Ansprüche 5 bis 7, wobei der Proxyagent (240) eine Vielzahl von Verbindungen zu dem Proxyserver (250) öffnet.

## Revendications

1. Système de communication de réseau à mandataire inverse comprenant :
un agent mandataire (240) placé à l'intérieur d'un réseau sécurisé (50) adressable par au moins un dispositif du réseau interne (200), l'agent mandataire établissant des connexions de réseau sortantes ;
un dispositif de sécurité (220) à travers lequel tout le trafic entre le réseau sécurisé (50) et le réseau externe (10) doit se déplacer, le dispositif de sécurité autorisant au moins les connexions sortantes via au moins un protocole de réseau prédéterminé ;
un serveur mandataire externe (250) à l'extérieur du réseau sécurisé (50) et pouvant être atteint par l'agent mandataire (240) via les connexions de réseau sortantes à travers le dispositif de sécurité (220), le serveur mandataire externe (250) étant également adressable par au moins un dispositif du réseau externe (230), permettant de ce fait la communication entre l'au moins un dispositif du réseau externe et l'au moins un dispositif du réseau interne, dans lequel l'agent mandataire (240) et le serveur mandataire externe (250) sont adaptés pour communiquer en amenant l'agent mandataire (240) à se connecter au serveur mandataire externe (250) pour vérifier le trafic en attente **caractérisé par** le serveur mandataire externe (250) retournant un train de données lent d'octets non essentiels ignorés par l'agent mandataire (240), s'il n'y a pas de trafic en attente, et le serveur mandataire externe transmettant immédiatement les données à l'agent mandataire (240) lorsque le serveur mandataire externe reçoit les données depuis un client, fermant ainsi la connexion pour vider toute mise en mémoire tampon quelconque effectuée par les serveurs mandataires participant (sortant).

2. Système selon la revendication 1, incluant, en outre, un serveur mandataire sortant (200) en communication avec l'agent mandataire (240) et que l'agent mandataire utilise pour établir les connections sortantes.

3. Système selon la revendication 2, dans lequel le serveur mandataire externe (250) est en communication avec au moins un autre réseau, reçoit, et mémorise les données adressées à l'au moins un dispositif du réseau interne, l'agent mandataire envoyant des données sortantes au serveur mandataire externe, lequel transmet les données à l'au moins un dispositif du réseau externe.

4. Système selon la revendication 3, dans lequel l'agent mandataire (240) interroge le serveur mandataire externe pour vérifier s'il existe des données adressées à l'au moins un dispositif du réseau interne, et dans lequel l'agent mandataire (240) télécharge les données adressées à l'au moins un dispositif du réseau interne depuis le serveur mandataire externe et envoie les données à l'au moins un dispositif du réseau interne.

5. Procédé d'accès d'un dispositif du réseau interne (200) sur un réseau sécurisé (50), le réseau incluant un dispositif de sécurité (220), le procédé comprenant les étapes consistant à :
mémoriser des données adressées au dispositif du réseau interne (200) dans un serveur mandataire externe (250) ;
maintenir un agent mandataire (240) sur le réseau sécurisé ; l'agent mandataire exécutant les étapes consistant à :
interroger le serveur mandataire externe (250) concernant les données adressées au dispositif du réseau interne ;
envoyer au dispositif du réseau interne (50) toutes données quelconques sur le serveur mandataire externe et adressées au dispositif du réseau interne (200) ; et
envoyer au serveur mandataire externe (250) toutes données quelconques adressées au dispositif externe en communication avec le serveur mandataire externe, dans lequel l'interrogation comprend les étapes consistant à :
la connexion au serveur mandataire externe (250) pour vérifier tout trafic en attente ; le procédé étant **caractérisé par** les étapes consistant à :
retourner un train de données lent d'octets non essentiels ignorés par l'agent mandataire (240) s'il n'y a pas de trafic en attente ;
transmettre immédiatement les données depuis le serveur mandataire externe (250) à l'agent mandataire (240) lorsque le serveur mandataire externe reçoit les données depuis un client, fermant ainsi la connexion pour vider toute mise en mémoire tampon effectuée par les serveurs mandataires participant (sortant).

6. Procédé selon la revendication 5, comprenant, en outre, la communication depuis le dispositif du réseau interne (50) au serveur mandataire externe (250) en utilisant un premier protocole de réseau, le dispositif du réseau externe (230) communiquant avec le serveur mandataire externe (250) en utilisant un second protocole de réseau, dans lequel les données adressées au dispositif du réseau interne (50) utilisant le second protocole de réseau, sont transmises au dispositif interne (50) utilisant le premier protocole de réseau de sorte que le second protocole de réseau est transporté vers le dispositif du réseau interne à l'intérieur du premier protocole de réseau.

7. Procédé selon la revendication 5 ou 6, comprenant, en outre, la réécriture des témoins avec des identificateurs uniques pour empêcher une transmission inadvertente des informations privées à un destinataire incorrect sur le réseau sécurisé (50).

8. Procédé selon l'une quelconque des revendications 5 à 7, dans lequel l'agent mandataire (240) ouvre une pluralité de connexions avec le serveur mandataire (250).
